# EUROPEAN PATENT APPLICATION

(11) **EP 4 715 949 A1**
(43) Date of publication of application: **25.03.2026**
(21) Application number: 25192321.5
(22) Date of filing: 29.07.2025
(51) Int. Cl.: H01M 10/42, H01M 10/613, H01M 50/213, H01M 50/244, H01M 50/264, H01M 50/284, H01M 50/291, H01M 50/293, H01M 50/249

(54) **BATTERY PACK**

(30) Priority: 23.09.2024 CN 202422325546 U; 20.11.2024 WO PCT/CN2024/133229
(71) Applicant: Eve Energy Co., Ltd., Huizhou, Guangdong 516006 (CN)
(72) Inventor: ZHU, Weiwei, Huizhou, Guangdong, 516006 (CN); ZHOU, Hongquan, Huizhou, Guangdong, 516006 (CN)
(74) Representative: Berggren Oy

(57) **Abstract**

The present application provides a battery pack. The battery pack includes a case (1); a separation mechanism provided in the case and dividing an inner space of the case into an electrical compartment and a battery compartment, wherein the separation mechanism includes a flexible separator (21); an electrical component (3) disposed in the electrical compartment and including a collecting board (31) and a collecting line (32), wherein the collecting line is plugged with the collecting board, and the collecting line passes through the flexible separator in the thickness direction of the flexible separator to the battery compartment; a battery module disposed in the battery compartment and including a battery core (4), wherein the collecting line enters the battery compartment and collects parameters of the battery core; foamed glue (5) filling voids in the battery compartment.

## Description

### TECHNICAL FIELD

The present application relates to the technical field of batteries, and more particularly, to a battery pack.

### BACKGROUND

A case of a battery pack is a structure for installing and covering the battery cell. In related arts, a space for mounting the battery cell, and a space for mounting electrical components (including an FPC wiring harness and a collecting board) are generally provided in the case of the battery pack. To achieve insulation between cores of the battery cells and to enhance the overall strength of the battery pack, foaming glue is usually provided between the battery cells.

However, during foaming process of the foaming glue, the foaming glue propagates from the space for mounting the battery cell to the space for mounting electrical components and enters into the plug-in gap between the FPC wiring harness and the collecting board, resulting in poor connection between the FPC wiring harness and the collecting board.

### SUMMARY

The present application provides a battery pack, including a case; a separation mechanism provided in the case and dividing an inner space of the case into an electrical compartment and a battery compartment, wherein the separation mechanism includes a flexible separator; an electrical component disposed in the electrical compartment and including a collecting board and a collecting line, wherein the collecting line is plugged with the collecting board, and the collecting line passes through the flexible separator in thickness direction of the flexible separator into the battery compartment; a battery module disposed in the battery compartment and including a battery core, wherein the collecting line enters the battery compartment and collects parameters of the battery core; and foaming glue filling voids in the battery compartment.

### BRIEF DESCRIPTION OF THE DRAWINGS

FIG. 1 is an exploded view of a battery pack according to the present application;
FIG. 2 is a partial schematic view of a battery pack according to the present application;
FIG. 3 is a schematic structural diagram of a separation mechanism according to the present application; and
FIG. 4 is another schematic structural diagram of a separation mechanism according to the present application.

Reference Numerals:
case 1; top cover 11; bottom plate 12; frame 13; first extending part 131; second extending part 132; separation mechanism 2; flexible separator 21; first through-groove 211; second through-groove 212; cross beam 22; electrical component 3; collecting board 31; collecting line 32; copper bar 33; battery core 4; foaming glue 5; and liquid-cooled tube 6.

### DETAILED DESCRIPTION OF THE EMBODIMENTS

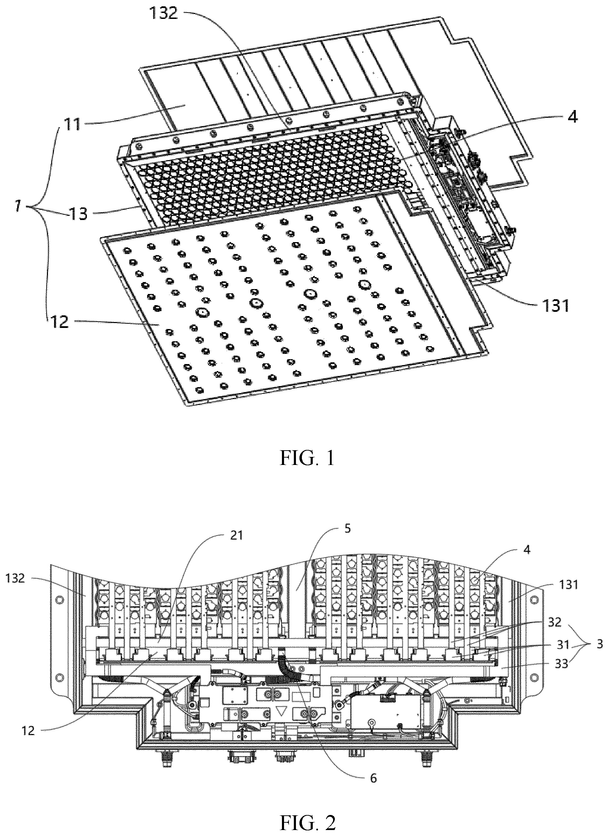

Referring to FIGS. 1-4, an embodiment of the present application provides a battery pack including: a case 1; a separation mechanism 2 provided in the case 1 and dividing an inner space of the case 1 into an electrical compartment and a battery compartment; wherein the separation mechanism 2 includes a flexible separator 21; an electrical component 3 disposed in the electrical compartment; wherein the electrical component 3 includes a collecting board 31 and a collecting line 32, the collecting line 32 is plugged with the collecting board 31, and the collecting line 32 passes through the flexible separator 21 in a thickness direction of the flexible separator 21 to the battery compartment; a battery module disposed in the battery compartment; wherein the battery module includes a battery core 4, and the collecting line 32 enters the battery compartment and collects parameters of the battery core 4; and foaming glue 5 filling voids in the battery compartment.

It could be understood that the electrical compartment and the battery compartment in the present application are separated as two mutually independent spaces by the separation mechanism 2. The electrical compartment and the battery compartment are kept separated as far as possible to prevent the foaming glue 5 from entering the electrical compartment, thereby preventing the foaming glue 5 from covering the electrical component 3 in the electrical compartment, and thereby facilitating detection and maintenance of the electrical component 3. The flexible separator 21 may be made of a flexible material, such as ethylene vinyl acetate (EVA) foam, to provide a certain deformation capacity, thereby making the elements passing through the flexible separator 21 less susceptible to damage during vibration of the battery pack. The collecting line 32 is an element for collecting parameters such as temperature and pressure in the battery module, for example, a flexible printed circuit (FPC) busbar. An end of the FPC busbar needs to be arranged close to the battery core 4, and another end of the FPC busbar needs to be connected to the collecting board 31. The plug-in connection of the collecting line 32 with the collecting board 31 may be achieved by plugging a terminal of the collecting board 31 with a terminal of the collecting line 32. In addition to the collecting board 31 and the collecting line 32, the electrical component 3 may include a low-voltage line, a basic device unit (BDU), a battery management system (BMS) motherboard, and a copper bar 33, where the low-voltage line, the BDU, and the BMS motherboard are disposed in the electrical compartment, and an end of the copper bar 33 is connected to the BDU, and another end of the copper bar 33 extends to battery compartment to connect with a cells contact system (CCS) in the battery compartment.

In some embodiments, the case 1 comprises a top cover 11, a bottom plate 12, and a frame 13. The top cover 11 and the bottom plate 12 are oppositely disposed on both sides of the frame 13. The top cover 11 and the bottom plate 12 are respectively connected to the frame 13 to define the inner space of the case 1. The frame 13 includes a first extending part 131 and a second extending part 132 oppositely disposed. The periphery of the separation mechanism 2 is respectively connected with the first extending part 131, the second extending part 132, the top cover 11 and the bottom plate 12.

It could be understood that by connecting the periphery of the separation mechanism 2 with the first extending part 131, the second extending part 132, the top cover 11, and the bottom plate 12, respectively, the separation mechanism 2 can be fixed in the case 1 while defining the inner space of the case 1. The bottom plate 12 and the frame 13 may be provided integrally or separately. The connection of the periphery of the separation mechanism 2 with the first extending part 131, the second extending part 132, the top cover 11, and the bottom plate 12, respectively may be achieved by connecting the separation mechanism 2 vertically with the first extending 131, the second extending 132, the top cover 11, and the bottom plate 12, respectively.

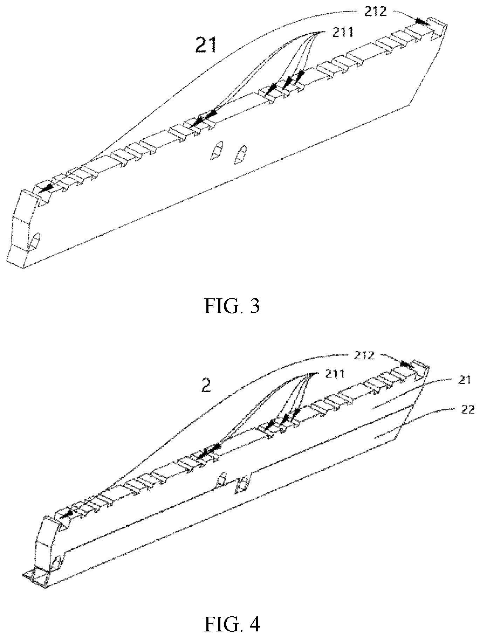

Referring to FIG. 3, in some embodiments, the separation mechanism 2 is the flexible separator 21, and the periphery of the flexible separator 21 is clearance fitted and adhered to the first extending part 131, the second extending part 132, the top cover 11, and the bottom plate 12, respectively.

It could be understood that the overall deformability of the separation mechanism 2 can be improved by directly using the flexible separator 21 as the separation mechanism 2. The separation mechanism 2 is connected to the first extending part 131, the second extending part 132, the top cover 11, and the bottom plate 12 by adhering, so that the gap among the periphery of the flexible separator 21 with the first extending part 131, the second extending part 132, the top cover 11, and the bottom plate 12 can be sealed by glue, thereby better preventing the foaming glue from entering the electrical compartment. The separation mechanism 2 is the flexible separator 21, i.e. the separation mechanism 2 is made of flexible material. The adhesion of the periphery of the flexible separator 21 to the first extending part 131, the second extending part 132, the top cover 11, and the bottom plate 12 may be achieved by providing the glue among the periphery of the flexible separator 21, the first extending part 131, the second extending part 132, the top cover 11, and the bottom plate 12 to adhere thereamong. During install of the flexible separator 21, the glue may be attached to the flexible separator 21 to adhere with the first extending part 131, the second extending part 132, the top cover 11, and the bottom plate 12, or the glue may be attached to portions of the periphery of the flexible separator 21 to adhere with the first extending part 131, the second extending part 132, the top cover 11, and the bottom plate 12 meanwhile another portions of the periphery of the flexible separator 21 is snap-fitted with the first extending part 131, the second extending part 132, the top cover 11, and the bottom plate 12. The glue used for adhering may be a structural glue, to increase the strength of the flexible separator 21. Fixing members may be provided at both ends of the flexible separator 21 in the thickness direction, and the flexible separator 21 is clamped in the fixing members on both sides, so that stability of the flexible separator 21 can be improved.

In some embodiments, the size of the flexible separator 21 may be slightly greater than the longitudinal cross-sectional dimension of the inner space of the case 1, so that the periphery of the flexible separator 21 may be pressed against the inner wall of the case 1 during installing the flexible separator 21 into the case 1.

It could be noted that a specific numerical range in which the size of the flexible separator 21 may be slightly greater than the longitudinal cross-sectional dimension of the inner space of the case 1 is not limited in the present application, so long as the installation of the flexible separator 21 is facilitated and the periphery of the flexible separator 21 is pressed against the inner wall of the case 1 after the installation.

Referring to FIG. 4, in some embodiments, the separator 2 further includes a cross beam 22 fixedly connected to the bottom plate 12, the first extending part 131, and the second extending part 132. The flexible separator 21 is fixedly disposed on a side of the cross beam 22 away from the bottom plate 12, and the flexible separator 21 is clearance fitted and adhered to the top cover 11, the first extending part 131, and the second extending part 132.

It could be understood that the stability of the flexible separator 21 can be improved by fixing the flexible separator 21 to the side of the cross beam 22 away from the bottom plate 12. The cross beam 22 may be made of a material having a certain hardness, and the cross beam 22 may be connected to the bottom plate 12, the first extending part 131, and the second extending part 132 by welding, or may be connected by screws, or may be integrally provided with the bottom plate 12. The cross beam 22 is welded to or integrally provided with the bottom plate 12, the first extending part 131, and the second extending part 132, so that the tightness of the connection of the cross beam 22 to the case 1 can be improved and the foaming glue 5 can be prevented from entering the electrical compartment. The cross beam 22 may also be used to secure other electrical components 3 in the electrical compartment, such as the collecting board 31, to enhance the structural stability of the electrical compartment. The flexible separator 21 and the cross beam 22 can be fixedly connected by structural glue, so that the connection tightness of the flexible separator 21 and the cross beam 22 can be improved.

In some embodiments, the thickness of the flexible separator 21 may be less than the thickness of the cross beam 22, and the flexible separator 21 may be disposed close to the battery compartment. As such, the side of the flexible separator 21 close to the battery compartment, together with the cross beam 22, defines a step for mounting and fixing of another electrical components 3 in the battery compartment.

In some embodiments, the flexible separator 21 is provided with a first through-groove 211 in the thickness direction thereof, and the collecting line 32 enters the battery compartment through the first through-groove 211.

It could be understood that by arranging the first through-groove 211 in the thickness direction of the flexible separator 21, the collecting line 32 enters the battery compartment through the first through-groove 211, which facilitates the installation of the collecting line 211. The shape and size of the first through-groove 211 may be set in accordance with the shape and size of the collecting line 32. In a case that the flexible separator 21 is provided with the first through-groove 211, the flexible separator 21 is adhered to the case 1 by providing the glue on the circumferential surface (including a surface of the collecting line 32 away from the bottom of the first through-groove 211) of the flexible separator 21 to adhere with the case 1 after disposing the collecting line 32 in the first through-groove 211. As such, the tightness of the connection between the flexible separator 21 and the case 1 is improved.

In some embodiments, the first through-groove 211 is provided with the side of the flexible separator 21 close to the top cover 11.

Illustratively, the first through-groove 211 extends through both sides of the flexible separator 21 in the thickness direction thereof, and the side of the flexible separator 21 close to the top cover 11.

It could be understood that during the filling process, the expansion of the foaming glue 5 may occur. With filling the foaming glue 5, the foaming glue 5 may be gradually filled from the bottom plate 12 to the top cover 11. Since the expansion capacity of the foaming glue 5 is limited, the probability of the foaming glue 5 entering the electrical compartment from the first through-groove 211 can be reduced to a certain extent by opening the first through-groove 211 to the side of the flexible separator 21 close to the top cover 11.

In some embodiments, a plurality of the collecting lines 32 is provided, and a plurality of first through-grooves 211 is provided. The plurality of first through-grooves 211 corresponds one-to-one to the plurality of collecting lines 32, and each of the collecting lines 32 enters the battery compartment through each of the first through-grooves 211 corresponding thereto.

It could be understood that by arranging the plurality of first through-grooves 211 in one-to-one correspondence with the plurality of collecting lines 32, the size of the first through-groove 211 can be relatively smaller relative to that the plurality of the collecting lines is disposed in one first through-groove. As such, the first through-groove 211 can be more closely coupled with the collecting line 32, and the installation of the collecting line 32 can be facilitated, thereby preventing the foaming glue from entering the electrical compartment from the first through-groove 211. The collecting line 32 is used to acquire parameters in the battery module. In order to acquire parameters of the battery module, a plurality of the collecting lines 32 may be provided to improve the accuracy of the parameters.

In some embodiments, the collecting line 32 is in interference fitted with the first through-groove 211.

It could be understood that the collecting line 32 and the first through-groove 211 can be tightly coupled by an interference fit of the collecting line 32 and the first through-groove 211, and the foaming glue can be prevented from entering the electrical compartment from the first through-groove 211.

In some embodiments, the electrical compenment 3 further includes a copper bar 33. The copper bar 33 enters the battery compartment through the flexible separator 21 in the thickness direction of the flexible separator 21.

It could be understood that due to the deformability of the flexible separator 21, the installation of the copper bar 33 can be facilitated by passing the copper bar 33 through the flexible separator 21 in the thickness direction of the flexible separator into the battery compartment, and the copper bar 33 can be protected during the vibrate of the battery pack. An end of the copper bar 33 needs to be connected to the BDU, another end needs to be extended to the battery compartment to be connected to the CCS in the battery compartment, and the CCS is electrically connected to the battery core 4, so that the copper bar 33 is electrically connected to the battery core 4. Therefore, the copper bar 33 needs to be passed through the flexible separator 21.

In some embodiments, the flexible separator 21 is provided with a second through-groove 212 in the thickness direction thereof, and the copper bar 33 enters the battery compartment through the second through-groove 212.

It could be understood that by providing the second through-groove 212 in the thickness direction of the flexible separator 21, the copper bar 33 enters the battery compartment through the first through-groove 212, thereby facilitating the installation of the copper bar 33. The shape and size of the second through-groove 212 may be set in accordance with the shape and size of the copper bar 33. In a case that the copper bar 33 is sheet-like, the thickness direction of the copper bar 33 is the same as the depth direction of the second through-groove 212. With the second through-groove 212 provided on the flexible separator 21, the flexible separator 21 is adhered to the case 1 by providing the glue on the circumferential surface (including a surface of the copper bar 33 away from the bottom of the first through-groove 211) of the flexible separator 21 after disposing the copper bar 33 in the second through-groove 212. As such, the tightness of the connection between the flexible separator 21 and the case 1 is improved.

In some embodiments, the second through-groove 212 is disposed on the side of the flexible separator 21 close to the top cover 11.

It could be understood that during the filling process, the expansion of the foaming glue 5 may occur. With filling the foaming glue 5, the foaming glue 5 may be gradually filled from the bottom plate 12 to the top cover 11. Since the expansion capacity of the foaming glue 5 is limited, the probability of the foaming glue 5 entering the electrical compartment from the second through-groove 212 can be reduced to a certain extent by opening the second through-groove 212 to the side of the flexible separator 21 close to the top cover 11.

In some embodiments, the battery pack further includes a liquid-cooled tube 6. The liquid-cooled tube 6 passes through the flexible separator 21 in the thickness direction of the flexible separator 21, and enters the battery compartment through the electrical compartment. The structural glue is provided between the liquid-cooled tube 6 and the flexible separator 21.

It could be understood that due to the deformability of the flexible separator 21, the installation of the liquid-cooled tube 6 can be facilitated by passing the liquid-cooled tube 6 through the flexible separator 21 in the thickness direction of the flexible separator 21, thereby the liquid-cooled tube 6 entering the battery compartment through the electrical compartment, and the liquid-cooled tube 6 can be protected during the vibration of the battery. By providing the structural glue between the liquid-cooled tube 6 and the flexible separator 21, the liquid-cooled tube 6 and the flexible separator 21 can be tightly coupled, and the foaming glue can be prevented from entering the electrical compartment from the gap between the liquid-cooled tube 6 and the flexible separator 21. The liquid-cooled tube 6 is used for cooling the battery pack, and the inlet and the outlet of the liquid-cooled tube 6 are provided at the edge of the electrical compartment. Since liquid-cooled tube 6 needs to extend into the battery compartment to lower the temperature of the battery core 4, the liquid-cooled tube 6 needs to pass through the flexible separator 21. A through hole is formed on the flexible separator 21, and the liquid-cooled tube 6 passes through the through hole, to achieve that the liquid-cooled tube 6 passes through the flexible separator 21 in the thickness direction of the flexible separator 21. The structural glue is filled in the through hole, as such, the liquid-cooled tube 6 is effectively fixed and is tightly connected with the flexible separator 21.

It could be noted that, for a specific arrangement of the liquid-cooled structure which is disposed in the battery compartment, cooperates with the liquid-cooled tube 6, and is used for liquid cooling, reference may be made to the related arts. Since this part is not an improvement point of the present application, description will not be made.

According to the battery pack provided in the present application, by passing the collecting line through the flexible separator in the thickness direction of the flexible separator into the battery compartment, the collecting line can enter the battery compartment to collect parameters of the battery core. At the same time, since the flexible separator has a certain deformation capability, it is possible not only to facilitate the passage of the collecting line, but also to protect the collecting line during the vibration of the battery pack. By dividing the inner space of the case into the electrical compartment and the battery compartment by the separation mechanism, the electrical compartment and the battery compartment are separated to prevent the foaming glue from easily entering the plug-in gap between the collecting line and the collecting board, thereby avoiding poor connection between the collecting line and the collecting board.

The present application has been described in detail with reference to a battery pack. The principles and embodiments of the present application are described herein using specific examples. The description of the above embodiments is merely provided to help understand the technical solution and the core idea of the present application. It should be understood by those of ordinary skill in the art that modifications may still be made to the technical solutions described in the foregoing embodiments, or equivalents may be made to some of the technical features therein. These modifications or equivalents do not depart the essence of the corresponding technical solutions from the scope of the technical solutions of the embodiments of the present application.

## Claims

1. A battery pack, **characterized by** comprising:
a case (1);
a separation mechanism (2) disposed in the case (1) and dividing an inner space of the case (1) into an electrical compartment and a battery compartment, wherein the separation mechanism (2) comprises a flexible separator (21);
an electrical component (3) disposed in the electrical compartment and including a collecting board (31) and a collecting line (32), wherein the collecting line (32) is plugged with the collecting board (31), and the collecting line (32) passes through the flexible separator (21) in a thickness direction of the flexible separator (21) to the battery compartment;
a battery module disposed in the battery compartment and including a battery core (4), wherein the collecting line (32) enters the battery compartment and collects parameters of the battery core (4); and
a foaming glue (5) filling voids in the battery compartment.

2. The battery pack of claim 1, wherein the case (1) comprises a top cover (11), a bottom plate (12), and a frame (13); the top cover (11) and the bottom plate (12) are oppositely disposed on both sides of the frame (13) and are respectively connected to the frame (13) to define the inner space of the case (1); the frame (13) comprises a first extending part (131) and a second extending part (132) oppositely disposed; a periphery of the separation mechanism (2) is respectively connected with the first extending part (131), the second extending part (132), the top cover (11), and the bottom plate (12).

3. The battery pack of claim 2, wherein the separation mechanism (2) is the flexible separator (21), and a periphery of the flexible separator (21) is clearance fitted and adhered to the first extending part (131), the second extending part (132), the top cover (11), and the bottom plate (12), respectively.

4. The battery pack of claim 2, wherein the separation mechanism (2) further comprises a cross beam (22) fixedly connected to the bottom plate (12), the first extending part (131), and the second extending part (132); the flexible separator (21) is fixedly disposed on a side of the cross beam (22) away from the bottom plate (12); the flexible separator (21) clearance fitted and adhered to the top cover (11), the first extending part (131), and the second extending part (132).

5. The battery pack of claim 4, wherein the cross beam (22) is welded or integrated to the bottom plate (12), the first extending part (131), and the second extending part (132).

6. The battery pack of claim 4, wherein a thickness of the flexible separator (21) is less than a thickness of the cross beam (22).

7. The battery pack of claim 4, wherein a side of the flexible separator (21) close to the battery compartment, together with the cross beam (22), defines a step.

8. The battery pack of claim 2, wherein the flexible separator (21) is provided with a first through-groove (211) in the thickness direction of the flexible separator (21), and the collecting line (32) enters the battery compartment through the first through-groove (211).

9. The battery pack of claim 8, wherein the first through-groove (211) is provided on a side of the flexible separator (21) close to the top cover (11).

10. The battery pack of claim 8, wherein a plurality of the collecting lines (32) is provided, and a plurality of first through-grooves (211) is provided; the plurality of first through-grooves (211) corresponds in one-to-one to the plurality of collecting lines (32); each of the collecting lines (32) enters the battery compartment through a corresponding one of the first through-grooves (211).

11. The battery pack of claim 8, wherein the collecting line (32) is in interference fitted with the first through-groove (211).

12. The battery pack of claim 2, wherein the electrical compenment (3) further comprises a copper bar (33), and the copper bar (33) enters the battery compartment through the flexible separator (21) in the thickness direction of the flexible separator (21).

13. The battery pack of claim 12, wherein the flexible separator (21) is provided with a second through-groove (212)in the thickness direction of the flexible separator (21), and the copper bar (33) enters the battery compartment through the second through-groove (212).

14. The battery pack of claim 13, wherein the second through-groove (212) is disposed on a side of the flexible separation (21) close to the top cover (11).

15. The battery pack of any one of claims 1 to 14, wherein the battery pack further comprises a liquid-cooled tube (6), the liquid-cooled tube (6) passes through the flexible separator (21) in the thickness direction of the flexible separator (21) and enters the battery compartment by the electrical compartment, and a structural glue is provided between the liquid-cooled tube (6) and the flexible separator (21).
